(19) Europäisches Patentamt
European Patent Office
Office européen des brevets

(11) **EP 3 018 951 A1**

(12) **EUROPEAN PATENT APPLICATION**

(43) Date of publication:
**11.05.2016 Bulletin 2016/19**

(51) Int Cl.:
**H04W 52/36** (2009.01)  **H04W 52/38** (2009.01)

(21) Application number: **14306787.4**

(22) Date of filing: **07.11.2014**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventors:<br>• **Worrall, Chandrika**<br>  **Swindon, WI SN5 7DJ (GB)**<br>• **Llim, Seau Sian**<br>  **Swindon, WI SN5 7DJ (GB)** |
| (71) Applicant: **ALCATEL LUCENT**<br>**92100 Boulogne-Billancourt (FR)** | (74) Representative: **Huber, Meik**<br>**Alcatel-Lucent Deutschland AG**<br>**Intellectual Property Business Group**<br>**Lorenzstraße 10**<br>**70435 Stuttgart (DE)** |

(54) **Method and apparatus to handle multi-carrier operation in case of cellular service communication and proximity service communication**

(57) A method and apparatus for power management in a cellular network for handling multi-carrier operation in case cellular communication services and proximity communication services occur simultaneously is proposed. A Power Headroom Report is sent by a User Equipment. The Power Headroom Report at least contains a power reduction measure reflecting a power reduction if the User Equipment performs proximity service communication.

| $C_7$ | $C_6$ | $C_5$ | $C_4$ | $C_3$ | $C_2$ | $C_1$ | R |
|---|---|---|---|---|---|---|---|
| P | V | PH (Type 2, PCell) | | | | | |
| PR | R | $P_{CMAX,c}$ 1 | | | | | |
| P | V | PH (Type 1, PCell) | | | | | |
| PR | R | $P_{CMAX,c}$ 2 | | | | | |
| P | V | PH (Type 1, SCell 1) | | | | | |
| PR | R | $P_{CMAX,c}$ 3 | | | | | |

...

| | | |
|---|---|---|
| P | V | PH (Type 1, SCell n) |
| PR | R | $P_{CMAX,c}$ m |

**Fig. 5**

**Description**

FIELD OF THE INVENTION

The present invention relates to a method, User Equipment and Scheduler for Power Headroom reporting for cellular service communication and proximity service communications.

BACKGROUND OF THE INVENTION

This section introduces aspects that may be helpful in facilitating a better understanding of the invention. Accordingly, the statements of this section are to be read in this light and are not to be understood as admission about what is in the prior art.

3GPP launched a feasibility study for proximity services which is published in 3GPP TR22.803. According to the public safety support defined by 3GPP, a User Equipment is required to communicate to multiple public safety user groups via proximity service communication and to access cellular communication services at the same time. Multi-carrier operation is supported for proximity service communication and cellular service communication. Thus, the User Equipment either operates on different frequencies for cellular service communication and proximity service communication or shares the same frequency for proximity service communication and cellular service communication.

According to 3GPP TR 22.803, cellular service communication is understood as communication between the User Equipment and the eNodeB and the network. Proximity service communication is understood as communication between two proximity service enabled User Equipments without sending user data through the network and without including an eNodeB (direct mode). Further, proximity service communication may take place between two proximity service enabled User Equipments locally routed via one eNodeB but without using the network (locally routed mode).

Therefore, cellular service communication and proximity service communication have different destination points even though they originate from the same User Equipment. This results in power control issues especially if the User Equipment performs simultaneous transmission for cellular service communication and proximity service communication.

If only cellular service communication takes place, a Scheduler receives information about the User Equipment's power situation via the User Equipment's Power Headroom Report (3GPP TS 36.321). Based on this information, the Scheduler schedules an appropriate data size and Modulation and Coding Scheme for the uplink transmission by the User Equipment. The Power Headroom Report is calculated by the User Equipment based on the path loss, the transmission power and other parameters at the time of Power Headroom Report transmission.

A problem arises if the Power Headroom Report is calculated when simultaneous cellular service communication and proximity service communication is performed by the User Equipment. The Scheduler of the network may schedule the User Equipment for higher transmission power for cellular service communication and the User Equipment may fail to deliver such transmission power. This negatively impacts the system performance. In addition, there is a possibility for miss-match between the network and the User Equipment on the power control of the sounding reference signal transmission which leads to inaccuracy in channel estimation at the network and penetrates overall system performance.

SUMMARY OF THE INVENTION

It is an object of the invention to provide a new concept for addressing the above mentioned problems in networks which allow simultaneous cellular service communication and proximity service communication.

According to one embodiment, a method for power management in a cellular network is disclosed. At least some User Equipments in the cellular network are capable of cellular service communication and proximity service communication. A User Equipment sends a Power Headroom Report to a Scheduler. The Scheduler is integrated in an eNodeB or is located somewhere in the network for serving multiple eNodesBs. The Power Headroom Report at least contains a power reduction measure reflecting a power reduction if the User Equipment performs proximity service communication. Thus, with this power reduction measure the Scheduler is informed about the User Equipment's simultaneous cellular service communication and proximity service communication and about power sharing information corresponding to these simultaneous communications. Proximity service communication and cellular service communication are understood as defined in the background section above. This has the advantage that the knowledge of the Scheduler about power sharing between cellular service communication and proximity service communication in the User Equipment when generating the Power Headroom Report improves the accuracy in channel estimation in the network and improves the overall system performance.

According to one embodiment, the Power Headroom Report contains an index indicating if the User Equipment applies power sharing between cellular service communication and proximity service communication. Thus, from this index the Scheduler determines if the power given in the Power Headroom Report is affected by proximity service communication or not.

According to one embodiment, the lower limit for the configured maximum User Equipment power for serving a cell c $P_{CMAX,C}$ is defined as $P_{CMAX-L,c} = MIN \{P_{EMAX,c} - \Delta T_{C,c}, P_{PowerClass} -$

MAX $(MPR_c + A\text{-}MPR_c, P\text{-}MPR_c, P\text{-}pro\_se) - \Delta T_{C,c}\}$. P_pro-se is a parameter for the power reduction in case proximity service communication takes place in the User Equipment.

According to one embodiment, the power reduction in case of proximity service communication P-pro_se is defined in a lookup table for different combinations of at least one of band combinations of proximity service transmissions, operating frequency bands and resource allocation.

According to one embodiment, the power reduction in case of proximity service communication P-pro_se is defined as a single value for maximum power reduction independent of the operating band.

According to one embodiment, the lower limit for the configured maximum User Equipment power is defined as

$$P_{CMAX\_L} = MIN \{P_{EMAX} - \Delta T_C, P_{PowerClass} - MPR -$$
$$A\text{-}MPR - P\text{-}MPR_c - P\text{-}pro\_se - \Delta T_C\}.$$

According to one embodiment, the power reduction in case of proximity service communication is included in the Power Management Maximum Power Reduction parameter for serving a cell P-MPR$_c$. Thus, there is no special value for power reduction communicated with the Power Headroom Report. In one embodiment, an index gives the information if the Power Management Maximum Power Reduction parameter was altered to reflect the power reduction caused by proximity service communication.

According to one embodiment, a reserved bit in the Power Headroom Report is used to indicate if power reduction due to proximity service communication is applied to the corresponding Power Headroom Report.

According to one embodiment, sending a Power Headroom Report by the User Equipment is triggered if a timer expires or has expired and the power reduction due to proximity service communication for this cell has changed more than a specified threshold value.

According to one embodiment, a method for power management in a cellular network is proposed. At least some User Equipments in the cellular network are capable of cellular service communication and proximity service communication. The method comprises a receiving step for receiving a Power Headroom Report by a Scheduler from at least one User Equipment. The Scheduler is integrated in an eNodeB or is located somewhere in the network for serving multiple eNodesBs. The Power Headroom Report at least contains a power reduction measure reflecting a power reduction if the User Equipment performs proximity service communication. Thus, with this power reduction measure received by the Scheduler, the Scheduler is informed about the User Equipments simultaneous cellular service communication and proximity service communication and about power sharing information corresponding to these simultaneous communications at the time of generating the Power Headroom Report. Proximity service communication and cellular service communication are understood as defined in the background section. This has the advantage that the knowledge of the Scheduler about power sharing between cellular service communication and proximity service communication in the User Equipment when generating the Power Headroom Report improves the accuracy in channel estimation in the network and improves the overall system performance.

According to one embodiment, the Power Headroom Report contains an index indicating if the User Equipment applies power sharing between cellular service communication and proximity service communication.

According to one embodiment, the lower limit for the configured maximum User Equipment power for serving a cell $P_{CMAX,C}$ is defined as

$$P_{CMAX\_L,c} = MIN \{P_{EMAX,c} - \Delta T_{C,c}, P_{PowerClass} -$$
$$MAX(MPR_c + A\text{-}MPR_c, P\text{-}MPR_c, P\text{-}pro\_se) - \Delta T_{C,c}\}.$$

According to one embodiment, a Scheduler in a cellular network is proposed. The Scheduler comprises a receiver for receiving at least one Power Headroom Report. The Scheduler further comprises a scheduling entity for scheduling radio resources for at least one User Equipment. The Power Headroom Report at least contains a power reduction measure reflecting a power reduction if the at least one User Equipment performs proximity service communication. The scheduling entity uses the information received about power reduction for scheduling the radio resources.

According to one embodiment, a User Equipment in a cellular network performing the above mentioned method is proposed.

According to one embodiment, a Base Station in a cellular network performing the above mentioned method is proposed.

According to one embodiment, a Base Station in a cellular network which comprises a Scheduler as described above is proposed.

Further advantageous features of the embodiments of the invention are defined and are described in the following detailed description.

BRIEF DESCRIPTION OF THE DRAWINGS

Some embodiments of apparatus and methods in accordance with embodiments of the present invention are now described, by way of examples only, and with reference to the accompanying drawings, in which:

Fig. 1      schematically depicts a cellular service communication scenario

Fig. 2      schematically depicts a first proximity service communication scenario

Fig. 3      schematically depicts a second proximity service communication scenario

Fig. 4      depicts a Power Headroom MAC control element as known in the art

Fig. 5      depicts an Extended Power Headroom MAC control element according to the invention

DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

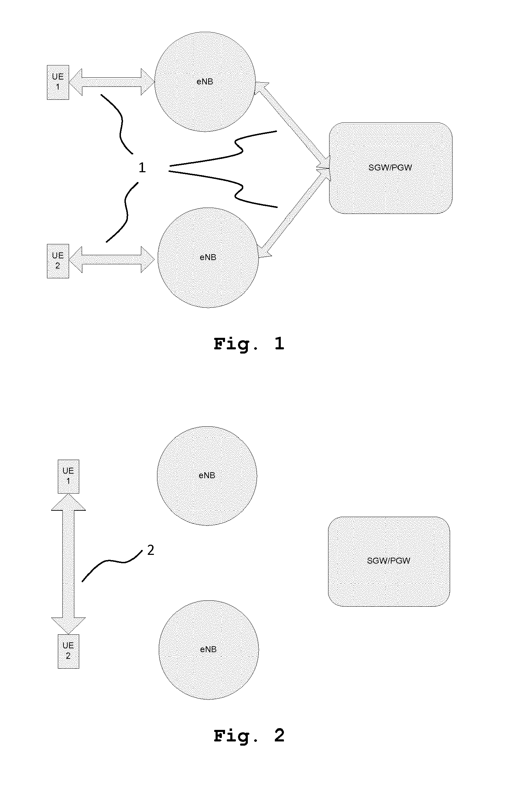

Fig. 1 schematically depicts a cellular service communication scenario. Even if two User Equipments UE1, UE2 are in close proximity and communicate with each other, their data path 1 in the user plane goes via the operator network eNB, SGW/PGW. The typical data path 1 for this type of communication as shown in Fig. 1 involves the eNodeBs eNB and the Serving Gateways/Packet data network Gateways SGW/PGW.

Fig. 2 schematically depicts a first proximity service communication scenario. If two or more User Equipments UE1, UE2 are in proximity to each other, they communicate by proximity service communication in direct mode with each other. For example, in LTE, the operator is able to move the data path 2 in the user plane off the access and core networks eNB, SGW/PGW onto direct links between the User Equipments UE1, UE2. The User Equipments communicate by a direct connection with each other. With regard to the data path 2, the eNodeBs eNB and the Serving Gateways/Packet data network Gateways SGW/PGW are not involved in a direct mode proximity service communication.

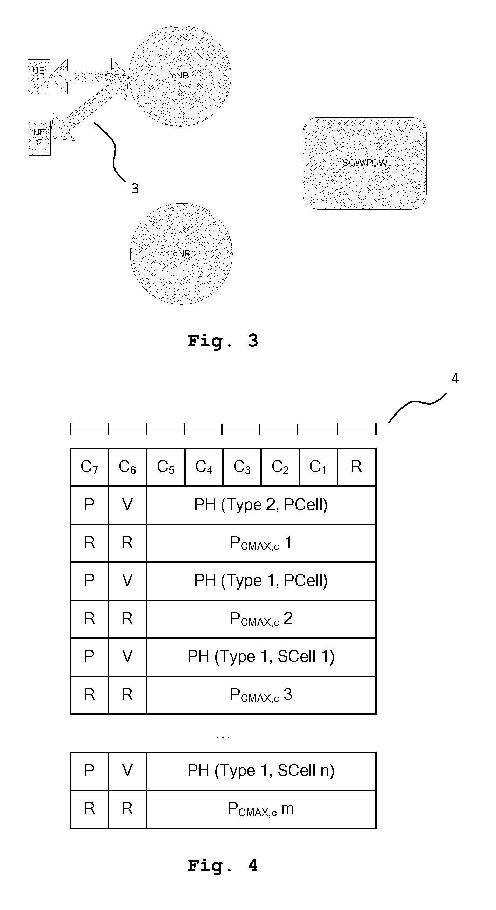

Fig. 3 schematically depicts a second proximity service communication scenario. If two or more User Equipments UE1, UE2 are in proximity to each other, they communicate locally-routed by proximity service communication with each other. Locally-routed means that the data path 3 in the user plane is routed via an eNodeB eNB, which is shared by both User Equipments UE1, UE2. The data path 3 does not include the core network, e.g. the Serving Gateways/Packet data network Gateways SGW/PGW are not involved in a locally routed proximity service communication.

Another mode of a proximity service communication scenario is that two User Equipments UE1, UE2 perform direct communication between each other. However the transmission grant for communication between the two User Equipments UE1, UE2 is allocated by the eNodeB eNB. This is a variation of locally routed proximity service communication, even though the data path for the proximity service communication is directly from one User Equipment UE1, UE2 to the other User Equipment UE2, UE1 and is not via the eNodeB eNB.

For proximity communication as depicted in Fig. 2 and 3, a Power Headroom reporting procedure is defined in 3GPP TS 36.321 - 5.4.6.

The Power Headroom reporting procedure is used to provide the scheduling eNodeB eNB with information about the difference between the nominal User Equipment maximum transmit power and the estimated power for UL-SCH transmission per activated Serving Cell and also with information about the difference between the nominal User Equipment maximum power and the estimated power for UL-SCH and PUCCH transmission on PCell.

RRC controls Power Headroom reporting by configuring two timers periodicPHR-Timer and prohibitPHR-Timer, and by signaling dl-PathlossChange which sets the change in measured downlink pathloss and the required power backoff due to power management to trigger a Power Headroom Report.

A Power Headroom Report is triggered if any of the following events occur:

- prohibitPHR-Timer expires or has expired and the path loss has changed more than dl-PathlossChange dB for at least one activated Serving Cell which is used as a pathloss reference since the last transmission of a Power Headroom Report when the User Equipment has uplink resources for new transmission;

- periodicPHR-Timer expires;

- upon configuration or reconfiguration of the Power Headroom reporting functionality by upper layers, which is not used to disable the function;

- activation of an SCell with configured uplink;

- prohibitPHR-Timer expires or has expired, when the User Equipment has uplink resources for new transmission, and the following is true in this TTI for any of the actived Serving Cells with configured uplink:

- there are uplink resources allocated for transmission or there is a PUCCH transmission on this cell, and the required power backoff due to power management (as allowed by P-MPR$_c$) for this cell has changed more than dl-Pathloss-Change dB since the last transmission of a Power Headroom Report when the User Equipment had uplink resources allocated for transmission or PUCCH transmission on this cell.

The User Equipment UE1, UE2 avoids triggering a Power Headroom Report when the required power backoff due to power management decreases only temporarily (e.g. for up to a few tens of milliseconds) and it should avoid reflecting such temporary decrease in the values of P$_{CMAX,c}$/PH when a Power Headroom Report is triggered by other triggering conditions.

The estimated power of UL-SCH transmission depends on the transport block format, downlink pathloss estimation, allocated resources for the UL-SCH transmission, etc. P$_{CMAX,c}$ is defined as a value range where P$_{CMAX,c}$ is set at the User Equipment to be a value within the specified range. The value range depends on User Equipment power class, the maximum transmit power signalled by the network, P$_{EMAX}$, maximum power reduction, MPR, additional maximum power reduction, A-MPR, and the transmission bandwidth.

P$_{CMAX,c}$ and the value range are defined in 3GPP TS 36.101 as follows:

The User Equipment sets its P$_{CMAX,c}$. The configured maximum output power P$_{CMAX,c}$ on serving cell c is set within the following bounds:

$$P_{CMAX\_L,c} \leq P_{CMAX,c} \leq P_{CMAX\_H,c}$$

For intra-band contiguous carrier aggregation:

$$P_{CMAX\_L,c} = MIN \{P_{EMAX,c} - \Delta T_{C,c}, \ P_{PowerClass} - MAX(MPRc + A\text{-}MPR_c, \ P\text{-}MPR_c) - \Delta T_{C,\ c}\}$$

For inter-band non-contiguous carrier aggregation:

$$P_{CMAX\_L,c} = MIN \{P_{EMAX,c} - \Delta T_{C,c}, \ P_{PowerClass} - MAX(MPR_c + A\text{-}MPR_c + \Delta T_{IB,c}, \ P\text{-}MPR_c) - \Delta T_{C,c}\}$$

$$P_{CMAX\_H,c} = MIN \{P_{EMAX,c}, P_{PowerClass}\}$$

$P_{EMAX,c}$ is the value given by IE P-Max for serving cell c.

$P_{PowerClass}$ is the maximum User Equipment power specified in Table 6.2.2-1 of 3GPP TS 36.101 without taking into account the tolerance specified in the Table 6.2.2-1 of 3GPP TS 36.101.

$\Delta T_{IB,c}$ is the additional tolerance for serving cell c as specified in Table 6.2.5A-3 of 3GPP TS 36.101.

For inter-band carrier aggregation, $MPR_c$ and $A\text{-}MPR_c$ apply per serving cell c. For intra-band contiguous carrier aggregation, $MPR_c$ = MPR and $A\text{-}MPR_c$ = A-MPR.

$P\text{-}MPR_c$ accounts for power management for serving cell c. For intra-band carrier aggregation, there is one power management term P-MPR for the User Equipment and $P\text{-}MPR_c$ = P-MPR.

$\Delta T_{C,c}$ equals 1.5 dB when Note 2 in Table 6.2.2-1 of 3GPP TS 36.101 applies to the serving cell c.

$\Delta T_{C,c}$ equals 0 dB when Note 2 in Table 6.2.2-1 of 3GPP TS 36.101 does not apply to the serving cell c.

For inter-band carrier aggregation with one uplink serving cell the total configured maximum output power $P_{CMAX}$ shall be set within the following bounds:

$$P_{CMAX\_L} \leq P_{CMAX} \leq P_{CMAX\_H}$$

wherein

$$P_{CMAX\_L} = P_{CMAX\_L,c},$$

and

$$P_{CMAX\_H} = P_{CMAX\_H,c}.$$

The measured maximum output power $P_{UMAX}$ shall be within the following bounds:

$$P_{CMAX\_L} - T(P_{CMAX\_L}) \leq P_{UMAX} \leq P_{CMAX\_H} + T(P_{CMAX\_H})$$

In summary, the configured maximum output power $P_{CMAX,c}$ on serving cell depends on the frequency band combination used, A-MPR, MPR (addresses the regional band values which are specified in the standard) and P-MPR (accounts for power management when power backoff is applied).

Fig. 4 depicts an Extended Power Headroom MAC control element 4 according to 3GPP TS 36.321 for transmitting a Power Headroom Report. The Extended Power Headroom MAC Control Element 4 is defined as follows:

$C_i$: this field indicates the presence of a Power Headroom field for the SCell with SCellIndex i. The $C_i$ field set to "1" indicates that a Power Headroom field for the SCell with SCellIndex i is reported. The $C_i$ field set to "0" indicates that a Power Headroom field for the SCell with SCellIndex i is not reported.

R: reserved bit, set to "0";

V: this field indicates if the Power Headroom value is based on a real transmission or a reference format. For Type 1 Power Headroom, V=0 indicates real transmission on PUSCH and V=1 indicates that a PUSCH reference format is used. For Type 2 Power Headroom, V=0 indicates real transmission on PUCCH and V=1 indicates that a PUCCH reference format is used. Furthermore, for both Type 1 and Type 2 Power Headroom, V=0 indicates the presence of the associated $P_{CMAX,c}$ field, and V=1 indicates that the associated $P_{CMAX,c}$ field is omitted;

Power Headroom PH: this field indicates the power headroom level. The length of the field is 6 bits. Further, Type 1 or Type 2 Power Headroom and PCell/SCell are indicated.

P: this field indicates whether the User Equipment applies power backoff due to power management (as allowed by P-MPR$_c$) . The User Equipment shall set P=1 if the corresponding P$_{CMAX,c}$ field would have had a different value if no power backoff due to power management had been applied.

P$_{CMAX,c}$: if present, this field indicates the P$_{CMAX,c}$ or $\tilde{P}_{CMAX,c}$ used for calculation of the preceding Power Headroom field.

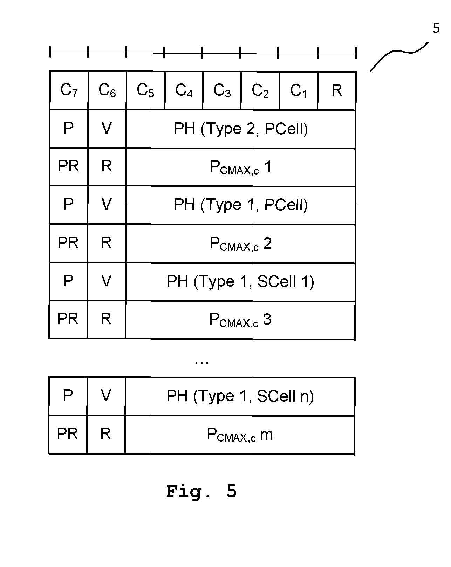

Fig. 5 depicts an Extended Power Headroom MAC control element 5 according to one embodiment of the invention.

According to the invention, sufficient information on the available User Equipment UE1, UE2 transmission power is provided to the network, e.g. the Scheduler which is included in the eNodeB eNB or is a separate Scheduler for multiple eNodeBs eNB. This is realized by signaling the nominal User Equipment maximum transmission power and/or the power reduction imposed due to the proximity service communication together with the Power Headroom Report. The Power Headroom report is provided to the Scheduler by the Extended Power Headroom MAC control element 5.

Therefore, the calculation of the Power Headroom report takes into account the power used in proximity service communication. The value range for the nominal User Equipment maximum transmission power which is communicated takes into account the possible power variation caused by proximity service communication. Therefore, the calculation of nominal User Equipment maximum transmission power and the power headroom reporting also reflects the power reduction due to proximity service communication.

In the Power Headroom Report, information to indicate whether the User Equipment applies power sharing between cellular service communication and proximity service communication is included. In other words, the User Equipment informs the network, i.e. the Scheduler if the calculated Power Headroom Report would have different values if the User Equipment did not perform proximity service communication and cellular service communication simultaneously at the time of the Power Headroom Report calculation.

In the Extended Power Headroom MAC control element according to Fig. 5, the "P" bit is used to indicate whether the power management due to power backoff is applied for Power Headroom Report calculation for the concerning service cell. In addition, the "R" (reserved) bits in Extended Power Headroom MAC control element is used for indicating if power reduction due to proximity service communication was considered when calculating the corresponding Power Headroom Report. These bits are indicated as "PR" in Fig. 5. If the "PR" bit is set to 1, the power reduction due to proximity service communication is applied for the corresponding Power Headroom. By the Extended Power Headroom MAC control element 5, the network, i.e. the Scheduler is informed of the power reduction caused by proximity service communication.

According to one embodiment, the value range for P$_{CMAX,C}$ is defined taking into account the possible proximity service communication.

Exemplarily, the value range for P$_{CMAX,C}$ is:

$$P_{CMAX\_L} \leq P_{CMAX,C} \leq P_{CMAX\_H}$$

Wherein

For intra-band contiguous carrier aggregation, the lower bound for P$_{CMAX,C}$ is set as follows:

$$P_{CMAX\_L,c} = MIN \{P_{EMAX,c} - \Delta T_{C,c}, \ P_{PowerClass} -$$
$$MAX(MPR_c + A\text{-}MPR_c, \ P\text{-}MPR_c, \ P\text{-}pro\_se) - \Delta T_{C,c}\},$$

and the higher bound for P$_{CMAX,C}$ is set as follows:

$$P_{CMAX\_H,c} = MIN \{P_{EMAX,c}, \ P_{PowerClass}\}$$

P-pro_se defines the maximum power reduction due to proximity service communication in the corresponding band. In one embodiment, the value for P-pro_se is defined for different band combinations of proximity service communication, operating frequency bands and resource allocation. The embodiment is described for intra-band contiguous carrier aggregation. In one embodiment, similar definition is proposed for other band combinations as well as non-carrier aggregation scenarios.

In one embodiment, P-pro_se is defined as the total maximum power reduction due to the proximity service communication independent of the operating band of proximity service communication.

According to one embodiment, the lower bound for $P_{CMAX,C}$ is set as follows:

$$P_{CMAX\_L} = MIN \{P_{EMAX} - \Delta T_C, \ P_{PowerClass} - MPR - A\text{-}MPR - P\text{-}MPR_C - P\text{-}pro\_se - \Delta T_C\}$$

According to one embodiment, the transmission power reduction is included within $P\text{-}MPR_C$ In this case, it is not necessary to define a separate parameter for the transmission power reduction due to proximity service communication. Rather the value range defined for $P\text{-}MPR_c$ is adapted to reflect the possible power reduction due to the proximity service communication. However, in such scenario, the network is not aware if the power reduction is caused by the power backoff resulting from legacy dual transmission on multiple radio networks or by to the proximity service communication.

According to one embodiment, a frequent Power Headroom Report and $P_{CMAX,C}$ transmission due to the reduction of power due to proximity service communication is controlled by a prohibitPHRPpro_se-Timer. A Power Headroom Report is triggered in addition to the triggering as described in 3GPP TS 36.321 if the following events occur:

- prohibitPHRPpro_se-Timer expires or has expired and the power reduction due to proximity service communication for this cell has changed more than a specified threshold value, ConfigPpro_seChange, since the last transmission of a Power Headroom Report.

The corresponding Power Headroom Report for the uplink transmission and the corresponding $P_{CMAX,C}$ are signaled to the network in the next available uplink transmission. The prohibitPHRPpro_se-Timer is restarted after transmission of Power Headroom Report and $P_{CMAX,C}$.

According to one embodiment, a frequent Power Headroom Report and $P_{CMAX,C}$ transmission due to the reduction of power due to proximity service communication is controlled by a timer prohibitPHRP-Timer. A Power Headroom Report is triggered in addition to the triggering as described above, if the following events occur:

- prohibitPHR-Timer expires or has expired and the power reduction due to proximity service communication for this cell has changed more than a specified threshold value, dl-PathlossChange, since the last transmission of a Power Headroom Report.

prohibitPHR-Timer and dl-PathlossChange are used in known systems and are further used according to this embodiment to reflect power reduction due to proximity service communication.

The corresponding Power Headroom Report for the uplink transmission and the corresponding $P_{CMAX,C}$ are signalled to the network in the next available uplink transmission. prohibitPHR-Timer is restarted after the transmission of the Power Headroom Report and the $P_{CMAX,\ C}$.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

**Claims**

1. A method for power management in a cellular network, comprising the steps:

- sending a Power Headroom Report by a User Equipment (UE1, UE2), wherein the Power Headroom Report at least contains a power reduction measure reflecting a power reduction if the User Equipment (UE1, UE2) performs proximity service communication.

2. A method for power management according to claim 1, wherein the Power Headroom Report contains an index (PR) indicating if the User Equipment (UE1, UE2) applies power sharing between cellular services and proximity services.

3. A method for power management according to one of claims 1 or 2, wherein the lower limit for the configured maximum User Equipment power for serving a cell $P_{CMAX,C}$ is defined as

$$P_{CMAX\_L,c} = MIN \{P_{EMAX,c} - \Delta T_{C,c}, P_{PowerClass} -$$
$$MAX(MPR_c + A\text{-}MPR_c, P\text{-}MPR_c, P\text{-}pro\_se) - \Delta T_{C,c}\}.$$

4. A method for power management according to one of claims 1 or 3, wherein the power reduction in case of proximity service communication P-pro_se is defined in a lookup table for different combinations of at least one of band combinations of proximity service transmissions, operating frequency bands and resource allocation.

5. A method for power management according to one of claims 1 or 3, wherein the power reduction in case of proximity service communication P-pro_se is defined as a single value for maximum power reduction independent of the operating band.

6. A method for power management according to one of claims 1 or 2, wherein the lower limit for the configured maximum User Equipment power is defined as

$$P_{CMAX\_L} = MIN \{P_{EMAX} - \Delta T_C, P_{PowerClass} - MPR -$$
$$A\text{-}MPR - P\text{-}MPR_c - P\text{-}pro\_se - \Delta T_C\}.$$

7. A method for power management according to claim 1, wherein the power reduction in case of proximity service communication is included in the Power Management Maximum Power Reduction parameter for serving a cell P-$MPR_c$.

8. A method for power management according to one of claims 1 or 7, wherein a reserved bit (PR) in the Power Headroom Report is used to indicate if power reduction due to proximity service transmission is applied to the corresponding Power Headroom Report.

9. A method for power management according to one of claims 1 or 8, wherein sending a Power Headroom Report is triggered if a timer expires or has expired and the power reduction due to proximity service communication for this cell has changed more than a specified threshold value.

10. A method for power management in a cellular network, comprising the steps:

- receiving a Power Headroom Report by a Scheduler (eNB) from at least one User Equipment (UE1, UE2), wherein the Power Headroom Report at least contains

a power reduction measure reflecting a power reduction if the User Equipment (UE1, UE2) performs proximity service communication.

11. A method for power management according to claim 10, wherein the Power Headroom Report contains an index indicating if the User Equipment (UE1, UE2) applies power sharing between cellular services and proximity services.

12. A method for power management according to one of claims 10 and 11, wherein the lower limit for the configured maximum User Equipment power for serving a cell $P_{CMAX,C}$ is defined as

$$P_{CMAX\_L,c} = MIN\ \{P_{EMAX,c} - \Delta T_{C,c},\ P_{PowerClass} -$$

$$MAX(MPR_c + A\text{-}MPR_c,\ P\text{-}MPR_c,\ P\text{-}pro\_se) - \Delta T_{C,c}\}.$$

13. A Scheduler in a cellular network, comprising:

- a receiver for receiving at least one Power Headroom Report,
- a scheduling entity for scheduling radio resources for at least one User Equipment (UE1, UE2), wherein the Power Headroom Report at least contains a power reduction measure reflecting a power reduction if the at least one User Equipment (UE1, UE2) performs proximity service communication and the scheduling entity uses the information received about power reduction for scheduling the radio resources.

14. A User Equipment in a cellular network, wherein the User Equipment performs a method according to one of claims 1 to 9.

15. A Base Station in a cellular network, wherein the Base Station performs a method according to one of claims 9 to 13.

Fig. 1

Fig. 2

Fig. 3

| $C_7$ | $C_6$ | $C_5$ | $C_4$ | $C_3$ | $C_2$ | $C_1$ | R |
|---|---|---|---|---|---|---|---|
| P | V | PH (Type 2, PCell) | | | | | |
| R | R | $P_{CMAX,c}$ 1 | | | | | |
| P | V | PH (Type 1, PCell) | | | | | |
| R | R | $P_{CMAX,c}$ 2 | | | | | |
| P | V | PH (Type 1, SCell 1) | | | | | |
| R | R | $P_{CMAX,c}$ 3 | | | | | |

...

| P | V | PH (Type 1, SCell n) | | | | | |
|---|---|---|---|---|---|---|---|
| R | R | $P_{CMAX,c}$ m | | | | | |

Fig. 4

| C7 | C6 | C5 | C4 | C3 | C2 | C1 | R |
|---|---|---|---|---|---|---|---|
| P | V | PH (Type 2, PCell) ||||||
| PR | R | $P_{CMAX,c}$ 1 ||||||
| P | V | PH (Type 1, PCell) ||||||
| PR | R | $P_{CMAX,c}$ 2 ||||||
| P | V | PH (Type 1, SCell 1) ||||||
| PR | R | $P_{CMAX,c}$ 3 ||||||

...

| P | V | PH (Type 1, SCell n) |
|---|---|---|
| PR | R | $P_{CMAX,c}$ m |

**Fig. 5**

Europäisches
Patentamt

European
Patent Office

Office européen
des brevets

# EUROPEAN SEARCH REPORT

Application Number

EP 14 30 6787

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/324182 A1 (DENG TAO [US] ET AL) 5 December 2013 (2013-12-05) * paragraph [0056] - paragraph [0058] * * paragraph [0088] - paragraph [0089] * * paragraph [0108] - paragraph [0109] * * paragraph [0154] - paragraph [0160] * ----- | 1-15 | INV. H04W52/36 H04W52/38 |
| X | WO 2014/110747 A1 (FUJITSU LTD [JP]; LU YANLING [CN]) 24 July 2014 (2014-07-24) * page 13, line 19 - page 16, line 8; figures 12-14 * ----- | 1-15 | |
| | | | TECHNICAL FIELDS SEARCHED (IPC) |
| | | | H04W |

The present search report has been drawn up for all claims

| Place of search | Date of completion of the search | Examiner |
|---|---|---|
| The Hague | 8 April 2015 | Boetzel, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 6787

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2015

| Patent document cited in search report | | Publication date | Patent family member(s) | | Publication date |
|---|---|---|---|---|---|
| US 2013324182 | A1 | 05-12-2013 | CN 104350790 A | | 11-02-2015 |
| | | | EP 2856812 A2 | | 08-04-2015 |
| | | | TW 201406180 A | | 01-02-2014 |
| | | | US 2013324182 A1 | | 05-12-2013 |
| | | | WO 2013181444 A2 | | 05-12-2013 |
| WO 2014110747 | A1 | 24-07-2014 | NONE | | |

For more details about this annex : see Official Journal of the European Patent Office, No. 12/82